# EUROPEAN PATENT APPLICATION

(11) **EP 4 040 753 A1**
(43) Date of publication of application: **10.08.2022**
(21) Application number: 21165601.2
(22) Date of filing: 29.03.2021
(51) Int. Cl.: H04L 29/06, H04W 12/0431, H04L 9/08, H04L 9/30

(54) **ENCRYPTED WI-FI PROVISIONING**

(30) Priority: 08.02.2021 WO PCT/CN2021/076018
(71) Applicant: Koninklijke Philips N.V., 5656 AG Eindhoven (NL)
(72) Inventor: Gu, Hai, 5656 AE Eindhoven (NL); Ge, Xin, 5656 AE Eindhoven (NL); Zhang, Fengchang, 5656 AE Eindhoven (NL)
(74) Representative: Philips Intellectual Property & Standards

(57) **Abstract**

A method for broadcasting network credentials to one or more receiver devices to enable them to connect to a wireless network. The method comprises receiving a request to connect to the wireless network from one or more of the receiver devices, the request containing a set, S, of one or more device IDs corresponding to the receiver devices. A session key, K, and a header, H, are generated based on the set S and a public key, PK. The session key K can be retrieved from the header H based on at least a private device key, skID, corresponding to one of the receiver devices. The method further comprises encrypting the network credentials for connection to the wireless network with the session key K and broadcasting the header H and the encrypted credentials.

## Description

### FIELD OF THE INVENTION

The invention relates to the field of Wi-Fi provisioning. In particular, the invention relates to secure Wi-Fi provisioning which supports group provisioning.

### BACKGROUND OF THE INVENTION

Wi-Fi provisioning is the process of connecting a new Wi-Fi receiver device to a Wi-Fi network. The provisioning process involves loading the device with the network name (often referred to as SSID) and its security credentials. Currently, the following methods are used: SoftAP, SmartConfig, BLEConfig, Wi-Fi DPP etc.

SmartConfig was first introduced in 2012 and then widely supported by many Wi-Fi chip manufacturers. All those variants make SmartConfig accepted as a mainstream provisioning method.

For SmartConfig, a smartphone or tablet is usually needed with a specific application installed. A typical provisioning procedure based on SmartConfig usually comprises setting a receiver device to promiscuous mode, thus enabling it to continuously receive all broadcast packets in the network. A user will input the router's credentials (e.g. password) on the installed app, the app encodes the network name (SSID) and password in specific schemas and broadcasts them into the network. The receiver device can then capture these packets, decode the SSID & password and use them to connect to the router.

According to a feature of SmartConfig data encoding, the length or destination address field of an 802.11 packet may be used to fill the encoded information. As payload is limited to one packet, the encoded information is usually sent via several packets. Different solutions from chip vendors adopt different encoding schemes.

In reality, because of cost savings or poor security consideration, there are serious security risks in many Wi-Fi provisioning solutions. For example, the network credentials (SSID and password) are typically plaintext and thus the broadcast packet could be sniffed in the air and the credential could be obtained by an eavesdropper. Additionally, the credentials are typically encoded using an arithmetic sequence and, as such, the credential could be recovered with a differential analysis. In some instances, encryption is used for encoding but the encryption key is fixed (it may even be hardcoded in the app) which allows a third party to recover the key by reverse engineering.

An updated SmartConfig solution also suggested assigning each receiver device with a random key. The user should then manually input the key into the app when inputting the router's password. However, there are disadvantages to inputting the random key from each receiver device.

As SmartConfig uses broadcasting, it is a good way to enable group provisioning (provisioning multiple receiver devices at once). It is simple to configure multiple receiver devices at the same time if there is no encryption or if a shared encryption key is used. However, if each receiver device has a unique key (as the updated SmartConfig solution suggests), the group provisioning is not easy to implement as all the random keys have to be input into the app.

Thus, there is a need for an improved Wi-Fi provisioning method which reduces security threats whilst supporting group provisioning.

### SUMMARY OF THE INVENTION

The invention is defined by the claims.

According to examples in accordance with an aspect of the invention, there is provided a method for broadcasting network credentials to one or more receiver devices to enable them to connect to a wireless network, the method comprising:
receiving a request to connect to the wireless network from one or more of the receiver devices, the request containing a set, S, of one or more device IDs corresponding to the receiver devices which sent the request;
generating a session key, K, and a header, H, based on the set S and a public key, PK, wherein the session key K is encrypted in the header;
encrypting the network credentials for connection to the wireless network with the session key K; and
broadcasting the header H and the encrypted credentials.

The session key K can be retrieved (decrypted) from the header H based on a private device key, skID. For this decryption process, each receiver device has access to the public key PK, their device ID and the corresponding private device key skID.

Some devices (receiver devices) which can be connected to a wireless network (e.g. Wi-Fi) do not have an interface where a user can input the credentials of the network (e.g. the SSID and the password of a router) to connect to it. Thus, a separate device, usually a mobile device, is used to send the credentials to the receiver device. One way of sending the credentials is via SmartConfig, where an app is used to wirelessly send the credentials to the receiver device. However, sending the credentials wirelessly is a security threat, as the credentials can be intercepted by a third party.

Thus, the inventors have realized that identity-based encryption can work in this situation to ensure that the network credentials can still be sent wirelessly whilst greatly reducing the security threat of broadcasting the credentials. This is due to the app on mobile devices used in methods such as SmartConfig being able to act as a trusted "sender device" which can broadcast the necessary information for the receiver devices to obtain the network credentials without a third party being able to obtain the credentials from the broadcast information.

Identity-based encryption is based on a trusted key generator (manager device) having a master secret key MSK. A receiver device will have a device identifier (a device ID) which they send to the manager device. The manager device generates a private device key skID from the device ID and the master secret key MSK. Each private device key skID is specific to the device ID that was used to generate it (and thus specific to a particular receiver device). The private device key skID is then sent to the corresponding receiver device. It must be noted that the receiver device does not have access to the master secret key MSK but can have access to the public key PK.

When the user wishes to connect a receiver device to the wireless network, the receiver device can send a request to a so-called sender device (e.g. an app on a mobile phone) such that the request contains the device ID. If more than one device wishes to connect to the wireless network, the sender device will receive a set S of device IDs. The sender device then creates a header H and a session key K based on the set S and the public key PK. The header H is, essentially, an encrypted version of the session keys K which can be decrypted with at least the private device key skID.

The session key K is then used to encrypt the network credentials. The session key K is preferably a symmetric encryption key, such that any information encrypted with a session key K can also be decrypted with the same session key K. The encrypted credentials are then broadcast together with the header H. Any third party intercepting the broadcast would not be able to decrypt the encrypted credentials without any further information. However, a device with a device ID present in the set S and the corresponding private device skID would be able to obtain the session key K from the header H and thus decrypt the encrypted credentials.

The method may further comprise broadcasting the set S with the header H and the encrypted credentials.

The method may further comprise receiving the network credentials from a user, wherein the network credentials may comprise at least a network identifier, SSID, and a password.

Encrypting the credentials may be based on a symmetric encryption algorithm such as the advanced encryption standard (AES) cryptography algorithm. Alternatively, other symmetric encryption algorithms could be used. For example, the data encryption standard (DES), the Rivest Cipher (RC), the international data encryption algorithm (IDEA) etc.

The method may further comprise encoding the header H, the set S and the encrypted credentials such that broadcasting comprises broadcasting the encoded information.

The invention also provides a method for connecting a receiver device to a wireless network with the encrypted credentials, wherein each receiver device is storing their device ID and the corresponding private device key skID, the method comprising:
receiving the header H and the encrypted credentials;
decrypting the header H to obtain the session key K, wherein decrypting the header H is based on at least the private device key skID;
decrypting the encrypted credentials using the session key K; and
connecting to the wireless network using the decrypted network credentials.

The receiver device initially receives a private device key skID which is unique to the receiver device and is based on the device ID. This can be achieved from, for example, inputting the device ID in to a trusted manager device such that the manager device generates the private device key skID corresponding to the device ID. The private device key skID can then be sent to the receiver device.

The private device key skID can be created at production/manufacturing phase and prestored in each receiver device.

Thus, when a user requests the receiver device to be connected to a wireless network, the receiver device will receive a header H and encrypted credentials to connect to the wireless network from a sender device. The receiver device can obtain the session key K by decrypting the header H using the private device key skID. Thus, the session key K can be used to decrypt the encrypted credentials and the decrypted network credentials can be used to connect to the wireless network.

The private device key skID will typically be securely stored in the receiver device along with the system public key PK and the device ID at manufacturing.

The method for connecting a receiver device to a wireless network may further comprise receiving a set, S, of one or more device IDs and checking whether the device ID is present in the set S received.

Decrypting the header H may be further based on the public key PK.

The methods preferably further comprises setting up the receiver devices before broadcasting network credentials and before connecting the receiver device to the wireless network, by:
obtaining a device identifier, device ID, for each one of the receiver devices;
generating a private device key, skID, for each receiver device based on the device ID and a master secret key MSK; and
sending the corresponding private device key skID to each receiver device.

The public key PK and the master secret key MSK may be generated based on a security parameter and the maximum number of receiver devices to which the encrypted network credentials can be broadcast.

Obtaining a device ID for each one of the receiver devices may be based on scanning a unique QR code on each one of the receiver devices.

The invention also provides a computer program product comprising computer program code means which, when executed on a system having a processing system, cause the processing system to perform all of the steps of the aforementioned methods.

The invention also provides a system for connecting one or more receiver devices to a wireless network, the system comprising a sender device storing a public key, PK, the sender device being configured to:
receive a request to connect to the wireless network from one or more of the receiver devices, the request containing a set, S, of one or more device IDs corresponding to the receiver devices;
generate a session key, K, and a header, H, based on the set S and the public key PK, wherein the session key K is encrypted in the header;
encrypt the network credentials for connection to the wireless network with the session key K; and
broadcast the header H and the encrypted credentials.

The invention also provides a system for connecting a receiver device to a wireless network with encrypted credentials, the system comprising one or more receiver devices each storing a device ID and a corresponding private device key skID, wherein each receiver device is configured to:
receive a header H and the encrypted credentials from a sender device;
decrypt the header H to obtain a session key K, wherein decrypting the header H is based on at least the private device key skID;
decrypt the encrypted credentials using the session key K; and
connect to the wireless network using the decrypted network credentials.

Any one of the systems may further comprise a manager device storing a master secret key, MSK, the manager device being configured to:
obtain a device identifier, device ID, for each one of the receiver devices;
generate a private device key, skID, for each receiver device based on the device ID and the master secret key MSK; and
send the corresponding private device key skID to each receiver device.

The systems may further comprise any combination of the one or more receiver devices, the sender device and/or the manager device.

An overall wireless network system comprises the sender device defined above, and one or more of the receiver devices defined above.

The public key PK and the master secret key MSK may be generated based on a security parameter and the maximum number of receiver devices to which the encrypted network credentials can be broadcast to.

Each receiver device may have an associated unique QR code and the sender device may be configured to obtain a device ID for each one of the receiver devices based on scanning the unique QR code on each one of the receiver devices.

The sender device may be further configured to receive the network credentials from a user, wherein the network credentials comprise at least a network identifier, SSID, and a password.

The sender device may be further configured to encode the header H, the set S and the encrypted credentials and broadcasting the network credentials may comprise broadcasting the encoded information.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
- Figure 1: shows an illustration of receiver devices connecting to a wireless network;
- Figure 2: shows a method for broadcasting network credentials;
- Figure 3: shows a method for setting up a receiver device; and
- Figure 4: shows a method for connecting a receiver device to a wireless network.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for broadcasting network credentials to one or more receiver devices to enable them to connect to a wireless network. The method comprises receiving a request to connect to the wireless network from one or more of the receiver devices, the request containing a set, S, of one or more device IDs corresponding to the receiver devices. A session key, K, and a header, H, are generated based on the set S and a public key, PK. The session key K can be retrieved from the header H based on at least a private device key, skID, corresponding to one of the receiver devices. The method further comprises encrypting the network credentials for connection to the wireless network with the session key K and broadcasting the header H and the encrypted credentials.

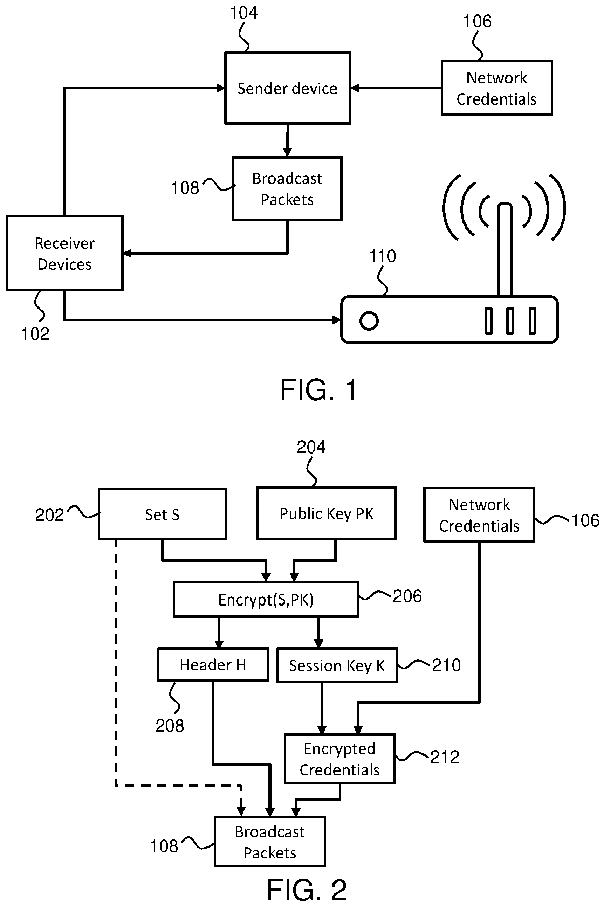

Figure 1 shows an illustration of receiver devices 102 connecting to a wireless network. The receiver devices 102 communicate with a sender device 104 (typically a mobile phone with an app) in order to send instructions that the receiver devices 102 want to connect to a wireless network. The network credentials 106 are input into the sender device 104 and sent, via broadcast packets 108 (e.g. 802.11 packets). The receiver devices 102 can thus receive the broadcast packets 108 containing the network credentials 106 and connect to the wireless network with the network credentials 106 via, for example, a router 110.

However, as previously discussed, the broadcast packets 108 can be intercepted by a third party. If intercepted, the third party would have access to the wireless network via the network credentials 106.

Broadcast encryption (BE) schemes are crypto systems that enable a sender to encrypt messages and transmit the messages to a group of users over a broadcast channel such that only the chosen users can use their private keys to decrypt messages.

Identity-based cryptography was introduced to simplify the certificate management process. As in identity-based cryptographic constructions, a user's key is allowed to be derived from identity information, such as an email address or phone number, while a corresponding private key is calculated by a trusted authority called the Key Generator Center. Identity-based broadcast encryption (IBBE) schemes can be seen as the generalization of identity-based encryption systems.

Figure 2 shows a method for broadcasting network credentials 106. An IBBE-like scheme is used to enable secure Wi-Fi provisioning which supports group provisioning. The method requires a set (S) of device IDs 202, a public key (PK) 204 and the network credentials 106. The device IDs could be scanned from a QR code on each one of the receiver devices 102 by the sender device 104. The set 202 and the public key 204 are input into an Encrypt(S,PK) algorithm 206 which outputs a session key (K) 210 and a header (H) 208.

After the sender device 104 has collected all of the IDs of devices that participate in the group provisioning and the session key 210 and the header 208 have been output, the network credentials 106 (e.g. Wi-Fi SSID and password) are encrypted with the session key 210. The sender device 104 then broadcasts the encrypted credentials 212, the header 208 and the set of IDs 202 in broadcast packets 108. Whilst the method for broadcasting network credentials 106 supports group provisioning, it also works for single device provisioning.

When each receiver device 102 has captured all the broadcast packets 108, it will decrypt the header 208 to get the session key 210 with its own private device key (skID) and decrypt the encrypted credentials 212 with the session key 210 to obtain the network credentials 106.

The private device key (skID) is a private key unique to each receiver device. The private device key can be given to the receiver device 102 during/after manufacturing of the receiver device 102 by a manager device (i.e. key generator center) prior to the provisioning.

An identity-based broadcast encryption scheme IBBE with a security parameter (P) and a maximal size (N) of the target set (S) can be defined as a tuple of algorithms IBBE = (Setup, Extract, Encrypt, Decrypt). The algorithms can be described as follows:
(PK, MSK) ← Setup(P, N): The Setup algorithm takes a security parameter (P) and N (the maximal size of the set of receiver devices 102 for one encryption), and outputs a master secret key (MSK) and a public key (PK) 204. The manager device is given the master secret key and the public key 204 is made public.

(skID) ← Extract(MSK, ID): The Extract algorithm takes the master secret key (MSK) and a device ID as an input and generates a private device key (skID) corresponding to the input device ID. A different private device key is generated for each device ID.

(H, K) ← Encrypt(S, PK): The encrypt algorithm 206 takes the public key (PK) 204 and a set 202 of identities S = {ID 1, ... , IDs} (with s ≤ N) and outputs a pair (H, K), where H is called the header and K is called a session key. When a message M is to be broadcast to the receiver devices, the sender device 104 generates (H, K), encrypts the message M under the session key (K) 210 and broadcasts the header (H) 208, the set (S) 202 and the encrypted message. In this case, the network credentials 106 are the message M.

(K) ← Decrypt(S, ID, skID, H, PK): The Decrypt algorithm takes the set (S) 202, an identity ID, the corresponding private key (skID), a header (H) 208 and the public key (PK) 204 as inputs. If ID ∈ S, the Decrypt algorithm outputs the session key (K) 210 which is then used to decrypt the encrypted message and recover the message M.

The following paper shows a particular implementation of the IBBE algorithms above: Delerablee, C.: Identity-Based Broadcast Encryption with Constant Size Cipher-texts and Private Keys. In: Kurosawa, K. (ed.) ASIACRYPT 2007. LNCS, vol. 4833,pp. 200-215. Springer, Heidelberg (2007).

In an alternative implementation, the Decrypt algorithm may only need the header (H) 208 and the private device key (skID) as inputs in order to output the session key (K) 210. For example, a receiver device 102 could automatically try and decrypt any received headers 208 based on the private device key and if, for example, it fails three times to obtain a session key 210 from any particular header 208, it could stop. In this particular implementation, the public key 204 may not be needed or could be embedded in the private device key and/or the header 208. However, if the public key 204 is embedded in the header 208, the size and/or number of the broadcast packets would need to increase.

However, for the improved security, it is preferred that the Decrypt algorithm requires the set 202, the public key 204, the header 208, a device ID and the corresponding private device key as inputs.

Thus, three separate types of devices are required in IBBE schemes: a manager device, a sender device 104, and receiver devices 102. The Setup and Extract algorithms are performed by the manager device which effectively creates a private device key for each receiver device. The Encrypt algorithm 206 is performed by the sender device 104 and the Decrypt algorithm is performed by the receiver devices 102. Both Setup and Extract algorithms will be typically executed at manufacturing (or at least prior to provisioning). The Encrypt algorithm 206 and the Decrypt algorithm are executed at the provisioning.

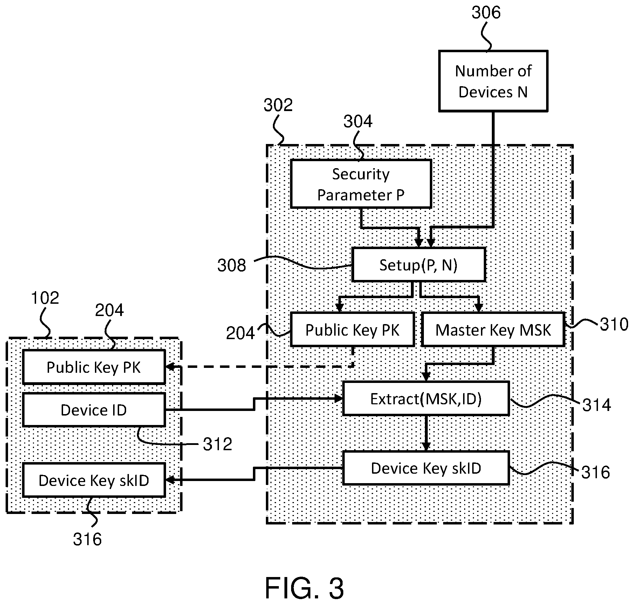

Figure 3 shows a method for setting up a receiver device 102. Each receiver device 102 has an identity number, device ID 312, which can be randomly distributed during manufacturing. Such device ID 312 could be transformed to QR code which is attached to the receiver device 102. The QR code enables a user to obtain the device ID 312 by scanning the QR code without the need to input the device ID 312.

The manager device 302 will use the Setup algorithm 308 for initialization in order to decide the maximum number (N) of receiver devices it supports 306 and to generate the public key 204 and the master secret key 310 based on a security parameter 304 and the maximum number 306. The Setup algorithm 308 only runs once, for example, during/prior to manufacturing the receiver devices 102. Later, the manager device 302 uses the Extract algorithm 314 to generate the private device key (skID) 316 for each receiver device 102 based on the device ID 312 and the master secret key 310. The manager device 302 can also provide the receiver devices 102 with the public key 204.

The maximal number of devices 306 can be, for example, N=100. The number of available bytes per Wi-Fi packet is limited in SmartConfig, thus messages of a large size require more broadcast packets 108. Thus, in order to improve the success rate of provisioning, the maximum number 306 should not be too large.

The Extract algorithm 314 may also referred to as the KeyGen algorithm. The private device keys 316 are securely stored in their corresponding receiver device 102 with the public key 204 and the device ID 312 at manufacturing.

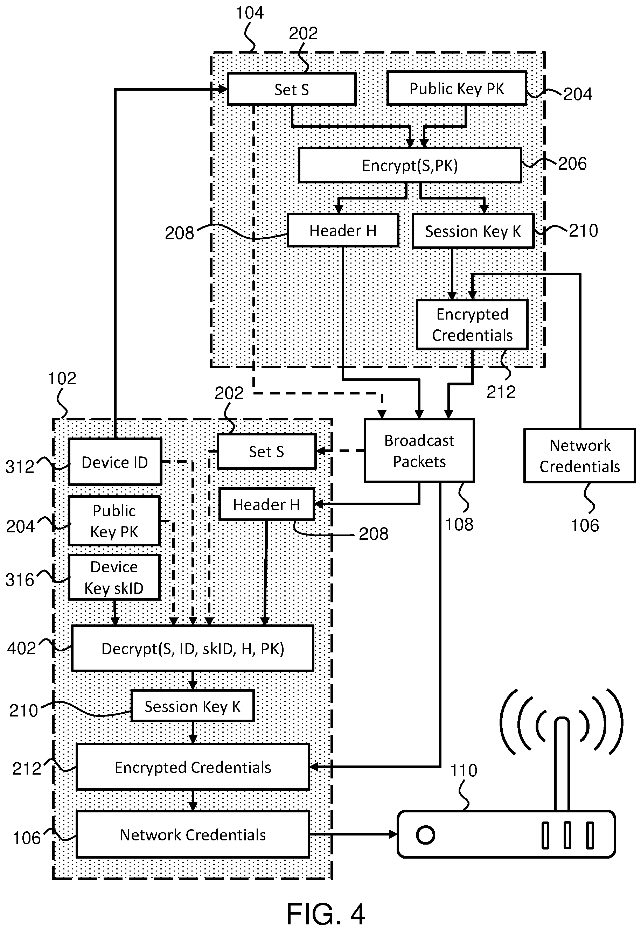

Figure 4 shows a method for connecting a receiver device 102 to a wireless network. When provisioning begins, the sender device 104 scans all the receiver devices 102 and collects a set of device IDs 202. The sender device 104 uses the Encrypt algorithm 206, with the public key 204 and the set 202 as inputs, to produce a session key 210 and a header 208 (the header 208 is used to restore the session key 210 and has a constant size). For example, the sender device 104 may be a mobile phone and an app with a key generation module could be used to randomly generate the session key 210 based on the set 202 and the public key 204. If only one receiver device 102 requires provisioning, the set 202 would only contain the device ID 312 of the single receiver device.

The session key 210 is used to encrypt the network credentials 106 (SSID and password) with, for example, the AES cryptography algorithm. The sender device 104 then broadcasts the header 208 and the encrypted credentials 212 and, optionally, the set 202. For example, the app could use an encoding scheme to encode the header 208, the encrypted credentials 212 and the set 202 and broadcast the encoded information with several 802.11 packets 108.

The receiver device 102 could capture the broadcast packets 108 and decode them. The Decrypt algorithm 402 could then be used to retrieve the session key 210 based on the header 208 and the private device key 316. Optionally, the set 202 received from the broadcast packets 108, the device ID 312 and the public key 204 are stored in the receiver device 102 could also be used to retrieve the session key 210 (dependent on the particular implementation of the Decrypt algorithm 402). With the session key 210, the encrypted credentials 212 can be decrypted to obtain the network credentials 106. Thus, if the decrypted network credentials 106 are according to protocol specifications, the receiver device 102 can connect to the router 110 with the network credentials 106.

Since the set 202 is broadcasted in some implementations, it is recommended to use short device IDs (e.g. six bytes) to reduce the size of the broadcast packets 108 and to make the provisioning faster.

The skilled person would be readily capable of developing a processor for carrying out any herein described method. Thus, each step of a flow chart may represent a different action performed by a processor, and may be performed by a respective module of the processing processor.

The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method for broadcasting network credentials (106) to one or more receiver devices (102) to enable them to connect to a wireless network, the method comprising:
receiving a request to connect to the wireless network from one or more of the receiver devices (102), the request containing a set, S, of one or more device IDs corresponding to the receiver devices;
generating a session key, K, and a header, H, based on the set S and a public key, PK, wherein the session key K is encrypted in the header;
encrypting the network credentials (106) for connection to the wireless network with the session key K; and
broadcasting the header H and the encrypted credentials.

2. The method of claim 1, further comprising broadcasting the set S with the header H and the encrypted credentials.

3. The method of any one of claims 1 or 2, further comprising receiving the network credentials (106) from a user, wherein the network credentials comprise at least a network identifier, SSID, and a password.

4. The method of any one of claims 1 to 3, wherein encrypting the network credentials is based on a symmetric encryption algorithm such as the AES cryptography algorithm.

5. The method of any one of claims 1 to 4, further comprising encoding the header H and the encrypted credentials and wherein broadcasting comprises broadcasting the encoded information.

6. A method for connecting a receiver device to a wireless network with the encrypted credentials broadcast using the method of any one of claims 1 to 5, wherein each receiver device stores their device ID and a corresponding private device key skID, the method comprising:
receiving the header H and the encrypted credentials;
decrypting the header H to obtain the session key K, wherein decrypting the header H is based at least on the private device key skID;
decrypting the encrypted credentials using the session key K; and
connecting to the wireless network using the decrypted network credentials.

7. The method of claim 6, further comprising:
receiving a set, S, of one or more device IDs;
checking whether the device ID is present in the set S received and, based on the device ID being present in the set S, performing the decrypting steps and the connecting step.

8. The method of claim 7, wherein the receiver device stores the public key PK and wherein decrypting the header H is further based on the public key PK.

9. The method of any one of claims 1 to 8, further comprising setting up the receiver devices before broadcasting network credentials and before connecting the receiver device to the wireless network, by:
obtaining a device identifier, device ID, for each one of the receiver devices;
generating a private device key, skID, for each receiver device based on the device ID and a master secret key MSK; and
sending the corresponding private device key skID to each receiver device.

10. The method of claim 9, wherein a public key PK and the master secret key MSK are generated based on a security parameter and the maximum number of receiver devices to which the encrypted network credentials can be broadcast.

11. The method of any one of claims 9 or 10, wherein obtaining a device ID for each one of the receiver devices is based on scanning a unique QR code on each one of the receiver devices.

12. A computer program product comprising computer program code means which, when executed on a system having a processing system, cause the processing system to perform all of the steps of the method according to any of claims 1 to 11.

13. A system for connecting one or more receiver devices to a wireless network, the system comprising a sender device (104) storing a public key, PK, the sender device being configured to:
receive a request to connect to the wireless network from one or more of the receiver devices, the request containing a set, S, of one or more device IDs corresponding to the receiver devices;
generate a session key, K, and a header, H, based on the set S and the public key PK, wherein the session key K is encrypted in the header;
encrypt the network credentials for connection to the wireless network with the session key K; and
broadcast the header H and the encrypted credentials.

14. A system for connecting a receiver device to a wireless network with encrypted credentials, the system comprising one or more receiver devices (102) each storing a device ID and a corresponding private device key skID, wherein each receiver device is configured to:
receive a header H and the encrypted credentials from a sender device;
decrypt the header H to obtain a session key K, wherein decrypting the header H is based on at least the private device key skID;
decrypt the encrypted credentials using the session key K; and
connect to the wireless network using the decrypted network credentials.

15. The system of any one of claims 13 or 14, further comprising a manager device storing a master secret key, MSK, the manager device being configured to:
obtain a device identifier, device ID, for each one of the receiver devices;
generate a private device key, skID, for each receiver device based on the device ID and the master secret key MSK; and
send the corresponding private device key skID to each receiver device.
